# EUROPEAN PATENT SPECIFICATION

(11) **EP 3 170 434 B1**
(45) Date of publication and mention of the grant of the patent: **12.09.2018**
(21) Application number: 16191847.9
(22) Date of filing: 30.09.2016
(51) Int. Cl.: A47J 43/07

(54) **SYSTEM FOR CONNECTION BETWEEN SHAFT AND CLUTCH**
SYSTEM ZUR VERBINDUNG ZWISCHEN WELLE UND KUPPLUNG
SYSTÈME DE CONNEXION ENTRE ARBRE ET EMBRAYAGE

(30) Priority: 20.11.2015 SI 201500281
(43) Date of publication of application: 24.05.2017
(73) Proprietor: BSH Hausgeräte GmbH, 81739 München (DE)
(72) Inventor: Berzelak, Matej, 3333 Ljubno (SI); Pesec, Jurij, 3301 Petrovce (SI); Potocnik, David, 3214 Zrece (SI)

(56) References cited:
- CN-U- 203 647 177
- FR-A1- 2 967 340

## Description

### Background of the invention

The present invention relates to the field of mechanical connecting elements, specifically connection between shaft and clutch of a processing vessel in household appliances.

### State of the art

A processing vessel for an electrical household appliance, such as a food processor, with the driving axis positioned below the processing bowl in the operating position, requires a secure and efficient connection between the shaft of the blade or another tool positioned within the processing vessel and the clutch element attached to the bottom of the processing vessel. This clutch fits to the clutch on the driving shaft of the motor.

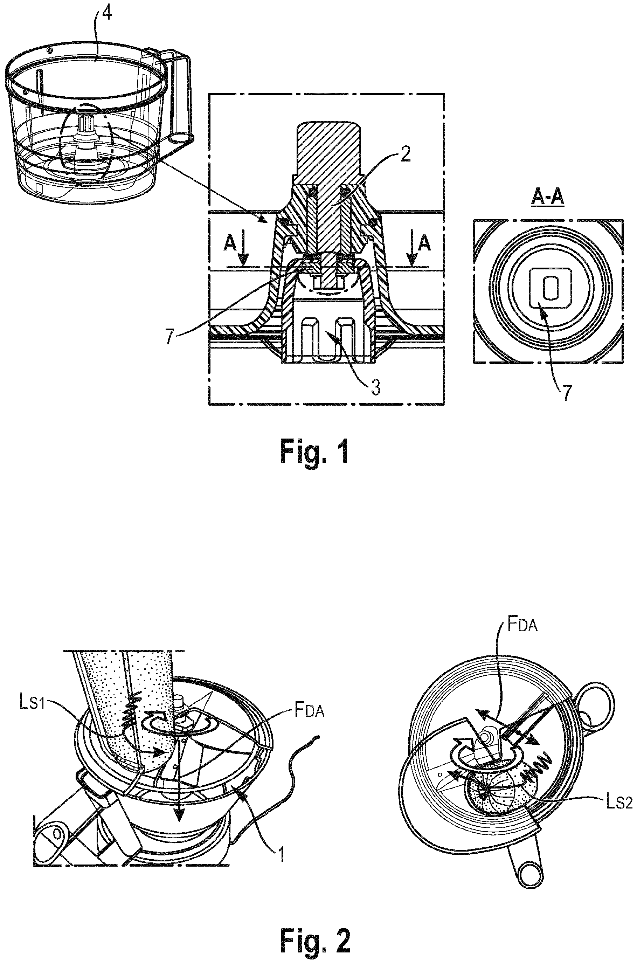

Said connection is often problematic for the reasons of sealing as well as loosening of the connection due to high and variable forces exerted upon the clutch during operation of the appliance. To prevent the phenomenon of loosening of the connection between shaft and clutch different manufacturers mostly use a similar solution. This solution comprises a nut with thread oriented opposite to the direction of motor rotation and a combination of different washers (see Figure 1). Said nut is a special metal element integrated in the plastic clutch and enables torque transmission to the metal-shaft via its shape., However, the currently used technique fails to prevent loosening in case of high dynamic loads. When bidirectional shock momentums and dynamic axial forces, or in other words high alternative dynamic loads, arise during the processing of harder ingredients, such connection does not work anymore since friction forces between elements in such connection are nullified and the clutch can lose its firm connection with the shaft in the processing vessel, resulting in misalignment, unwanted rotation or or even falling off of the clutch altogether. Document CN-U-203 647 177 (see Fig. 8) discloses a system for connection between shaft 723 and clutch 721 of a processing vessel 60 in a motorized household appliance, comprising a flexible connecting element 722 that provides an irreversible connection between said shaft 723 and clutch 721 during normal operation of the household appliance, wherein the connection is specifically adapted to withstand high dynamic loads arising from operation. Therefore there is a need to develop new solution that would prevent the loosening and/or misalignment effect of shaft to clutch connection in the processing bowl and would allow for simple installation and remain within reasonable costs.

### Problem to be solved

The purpose of this invention is to develop a concept, which will provide flexible and durable connection between shaft and clutch of the processing vessel in the sense of withstanding high alternative dynamic loads.

### Solution according to the invention

In order to achieve the object underlying the invention, the present invention provides an improved system for connection between shaft and clutch according to claim 1. Further, a household appliance, such as a food processor, according to claim 5 is provided. Advantageous embodiments are described in dependent claims.

According to the first aspect of an invention, a system for connection between shaft and clutch of a processing vessel in a motorized household appliance, preferably a food processor, wherein it further comprises a flexible connecting element that provides an irreversible connection between said shaft and clutch during normal operation of the household appliance and wherein the connection is specifically adapted to withstand high dynamic loads arising from operation, e.g. during processing of solid food ingredients is disclosed. The connecting element is intended for simple fixing of the shaft and the clutch of the processing vessel to ensure proper positioning and sealing and prevent the failing apart or unwanted dispositioning during operation. Conventional solutions involving screwing are not ideal since there are high forces present when solid ingredients are processed. These vibrations can result in unscrewing and loosening of the fixing means. The disclosed solution prevents the displacement of the flexible holding element during operation as well as ensures the continuous holding force as a result of the flexibility of the connecting element and the tension forces arising from the geometry of the shaft and optionally other elements.

According to the second aspect of an invention, a household appliance, such as a food processor, comprising the system for connection between shaft and clutch of a processing vessel is disclosed.

The objective of the invention is achieved through a flexible connecting element, such as, but not limited to, a washer, provides an irreversible connection between the shaft and the clutch of the processing vessel during normal operation of the household appliance. The flexible connecting element is specifically adapted to withstand high dynamic loads arising from operation, e.g. during processing of solid food ingredients.

### Embodiments of the invention

According to a preferred embodiment, the flexible connecting element is additionally positioned onto the shaft through a metal element, preferably fixed onto the clutch which comes into direct contact with the flexible connecting element upon snapping it onto the shaft. The metal element may be inserted into or added to the clutch to increase the tension of the snapped on flexible connecting element. It also increases durability through preventing the wear of plastic parts due to frictional forces arising between the flexible connecting element and the clutch during regular operation of the household appliance. According to the invention, the shaft is shaped at its distal end in the region of contact with the clutch in order to allow the flexible connecting element to be snapped on through the central hole in the flexible connecting element, said shaping of the shaft comprising a circumferential indentation with an edge that serves as means of preventing the falling off of the flexible connecting element. Conventional solutions involving screwing are not ideal since there are high forces present when solid ingredients are processed. These vibrations can result in unscrewing and loosening of the fixing means. The disclosed solution prevents the displacement of the flexible holding element during operation as well as ensures the continuous holding force as a result of the flexibility of the connecting element and the tension forces arising from the geometry of the shaft and optionally other elements.

Further, said indentation is positioned in regard to the flexible connecting element in such a manner that the distance between the said edge and the metal element is smaller than the axial dimension of the flexible connecting element, resulting in a strain exerted upon the flexible connecting element when it is snapped onto the shaft and further resulting in the increased fixing force. The smaller axial distance between the metal element on or by the clutch and the edge of the indentation of the shaft results in the deformation of the flexible connecting element and thus in forces that fix the shaft to the clutch firmly. The flexible nature of the connecting element enables for variants and adjustments in the regard to the intended use for the household appliance.

Additionally, the flexible connecting element is made of a flexible metallic alloy that is not easily plastically deformed. It is not desirable that the flexible fixing element is plastically deformed, during regular operation of the appliance or during its removal from the shat during maintenance, repairs or cleaning. Therefore a metal alloy with high elasticity and high resistance to plastic deformation must be used.

Advantageous embodiments and developments are the subject matter of the dependent claims.

### Brief description of the drawings

- Figure 1:: State of the art solution
- Figure 2:: Loads and forces arising during the processing of solid ingredients
- Figure 3:: Connection between the shaft and the clutch of the processing vessel through the flexible connecting element

### Detailed description of the invention

A processing bowl of the food processor 1 presented in a preferred embodiment comprises as vital elements enabling its function a shaft 2 and a clutch 3. Both said elements are integrated within the food processing vessel 4 as outlined in Figure 1. They are connected firmly to provide for torque transmission from the motor (not shown) to the blade 5 or another tool within the processing vessel 4.

Figure 2 explains high dynamic loads arise. During the processing of solid ingredients, e.g. slicing of salami with a cutting disc (not shown), in the processing bowl 4, very high dynamic loads arise which results in very unfavorable conditions for the connection stability between the shaft 2 and the clutch 3. Such high dynamic forces may arise when the blade of the cutting disc hits solid ingredients and large force appears in counter-direction of the rotation of the motor. That creates a shock load L_{S1} (Figure 2, left). Due to inertia of the cutting disc this load is released after the slice of solid foodstuff is cut off and another shock load L_{S2} arises in the direction of motor rotation (Figure 2, right). Besides the two alternating shock loads which arise at every revolution of the disc, the cutting process is also accompanied with arising dynamic axial forces F_{DA}. Altogether, these phenomena have unfavorable influence on the stability of the connection between the shaft 2 and the clutch 3, in the sense of loosening and misalignment of connected parts. Eventually, this can lead to failure of the connection and of the food processor 1.

Our invention solves these drawbacks through compensation and absorption of shocks loads and axial forces through the introduction of a flexible connecting element 6 connecting the shaft 2 and the clutch 3 of the processing vessel 4.

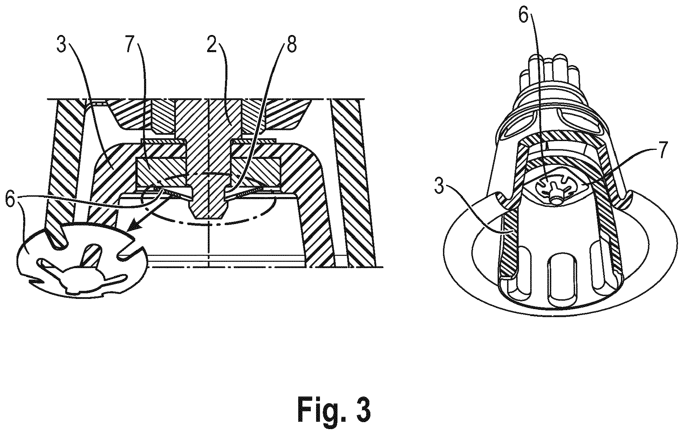

In figure 3, the connection system is presented that includes a special-shaped elastic washer as said flexible connecting element 6 and the corresponding mounting shape on the shaft 2. Axial movement of the flexible connecting element 6 and consequently of the clutch 3, which is firmly connected to the shaft 2 through the flexible connecting element 6, is prevented by the corresponding slot resulting from the shape of the shaft 2. The shape of the shaft 2 allows for irreversible connection of the inner circumference of the flexible connecting element 6 after it has been snapped on. In the preferred embodiment, the shaft 2 is formed in such a way, that it comprises a circumferential indentation 8 on its section where the clutch 3 is connected. Said indentation 8 is formed so as to prevent the flexible connecting part 6 to slip off the shaft 2 after it has been snapped on. The irreversible connection should be understood in a sense that it is irreversible during normal operation of the food processor 1. If desired, the flexible connecting element 6 can be removed by applying specific and high enough force for replacement, reparation and cleaning purposes. It is conceivable that such removal can be done without plastically deforming the flexible connection element 6, thus allowing its reuse after the desired operation has been completed. When mounted onto the shaft 2 and the corresponding metal element 7 for better fixation, the flexible connection element 6 is pre-stressed with axial force. Special construction of the flexible connecting element 6 and proper selection of its material enable optimal locking properties for mounting; elastic properties for compensating the manufacturing tolerance range of elements present in connection; elastic properties for compensating and absorbing alternating shocks loads; elastic properties for compensating movements caused by axial forces during processing. During the entire processing cycle the described system for connection between the shaft 2 and the clutch 3 of the processing vessel 3 provides for the compensation and absorption of high dynamic loads with its elastic properties, but without plastic deformation. The latter is very important in the sense of durability of the element. It should be noted, that this solution is very cost-effective as it can actually reduce costs compared to the present state of the art solutions. The installation of the flexible connecting element 6 is very simple, preferably as a snap-on.

### List of features

- 1: Food processor
- 2: Shaft
- 3: Clutch
- 4: Processing bowl
- 5: Blade
- 6: Flexible connecting element
- 7: Metal element
- 8: Indentation

- L_{S1}: load shock 1
- L_{S2}: load shock 2
- F_{DA}: dynamic axial forces

## Claims

1. A system for connection between shaft (2) and clutch (3) of a processing vessel (4) in a motorized household appliance, preferably a food processor (1), wherein it further comprises a flexible connecting element (6) that provides an irreversible connection between said shaft (2) and clutch (3) during normal operation of the household appliance wherein the connection is specifically adapted to withstand high dynamic loads arising from operation, e.g. during processing of solid food ingredients, **characterized in that** the shaft (2) is shaped at its distal end in the region of contact with the clutch (3) in order to allow the flexible connecting element (6) to be snapped on through the central hole in the flexible connecting element (6), said shaping of the shaft (2) comprising a circumferential indentation (8) with an edge that serves as means of preventing the falling off of the flexible connecting element (6).

2. The system according to claim 1, **characterized in that** said flexible connecting element (6) is additionally positioned onto the shaft (2) through a metal element (7), preferably fixed onto the clutch (3) which comes into direct contact with the flexible connecting element (6) upon snapping it onto the shaft (2).

3. The system according to any of the previous claims, **characterized in that** said indentation (8) is positioned in regard to the flexible connecting element (6) in such a manner that the distance between the said edge and the metal element (7) is smaller than the axial dimension of the flexible connecting element (6), resulting in a strain exerted upon the flexible connecting element (6) when it is snapped onto the shaft (2) and further resulting in the increased fixing force.

4. The system according to any of the previous claims, **characterized in that** the flexible connecting element (6) is made of a flexible metallic alloy that is not easily plastically deformed.

5. A household appliance, such as a food processor (1), comprising the system according to claim 1.

## Patentansprüche

1. System zur Verbindung zwischen Welle (2) und Kupplung (3) eines Bearbeitungsbehälters (4) in einem motorisierten Haushaltsgerät, vorzugsweise einer Küchenmaschine (1), wobei es ferner ein flexibles Verbindungselement (6) aufweist, das während des normalen Betriebs des Haushaltsgeräts eine irreversible Verbindung zwischen der Welle (2) und der Kupplung (3) schafft, wobei die Verbindung speziell dafür geeignet ist, hohen dynamischen Belastungen, die sich aus dem Betrieb ergeben, z. B. während der Verarbeitung fester Lebensmittelbestandteile, standzuhalten, **dadurch gekennzeichnet, dass** die Welle (2) an ihrem distalen Ende im Berührungsbereich mit der Kupplung (3) so geformt ist, dass sie dem flexiblen Verbindungselement (6) erlaubt, durch das zentrale Loch in dem flexiblen Verbindungselement (6) aufgerastet zu werden, wobei die Formung der Welle (2) eine umlaufende Vertiefung (8) mit einer Kante aufweist, die als Mittel zum Verhindern des Abfallens von dem flexiblen Verbindungselement (6) dient.

2. System nach Anspruch 1, **dadurch gekennzeichnet, dass** das flexible Verbindungselement (6) zusätzlich durch ein Metallelement (7) auf der Welle (2) angebracht, vorzugsweise auf der Kupplung (3) befestigt ist, die in direkten Kontakt mit dem flexiblen Verbindungselement (6) kommt, wenn es auf die Welle aufgerastet wird.

3. System nach einem der vorhergehenden Ansprüche, **dadurch gekennzeichnet, dass** die Vertiefung (8) gegenüber dem flexiblen Verbindungselement (6) in einer solchen Weise angeordnet ist, dass der Abstand zwischen der Kante und dem Metallelement (7) kleiner ist als die axiale Abmessung des flexiblen Verbindungselements (6), was zu einer Belastung führt, die auf das flexible Verbindungselement (6) einwirkt, wenn es auf die Welle (2) aufgerastet wird, und was ferner zu der erhöhten Fixierkraft führt.

4. System nach einem der vorhergehenden Ansprüche, **dadurch gekennzeichnet, dass** das flexible Verbindungselement (6) aus einer flexiblen Metalllegierung gefertigt ist, die nicht leicht plastisch verformt wird.

5. Haushaltsgerät, wie eine Küchenmaschine (1), die das System nach Anspruch 1 aufweist.

## Revendications

1. Système de raccordement entre un arbre (2) et un embrayage (3) d'un récipient de traitement (4) dans un appareil ménager à moteur, de préférence un robot culinaire (1), lequel système comprend en outre un élément de raccordement flexible (6) qui fournit un raccordement irréversible entre ledit arbre (2) et ledit embrayage (3) pendant le fonctionnement normal de l'appareil ménager, dans lequel le raccordement est adapté spécifiquement pour résister à des charges dynamiques élevées produites lors du fonctionnement, par ex. durant la transformation d'ingrédients alimentaires solides,
**caractérisé en ce que** l'arbre (2) est profilé à son extrémité distale dans la région de contact avec l'embrayage (3) de façon à permettre à l'élément de raccordement flexible (6) d'être encliqueté sur et à travers le trou central dans l'élément de raccordement flexible (6), ledit profilage de l'arbre (2) comprenant une dentelure circonférentielle (8) comportant un bord qui sert de moyen pour empêcher la chute vers l'extérieur de l'élément de raccordement flexible (6).

2. Système selon la revendication 1, **caractérisé en ce que** ledit élément de raccordement flexible (6) est positionné additionnellement sur l'arbre (2) via un élément métallique (7), de préférence fixé sur l'embrayage (3) qui entre en contact direct avec l'élément de raccordement flexible (6) lors de l'encliquetage de celui-ci sur l'arbre (2).

3. Système selon l'une des revendications précédentes, **caractérisé en ce que** ladite dentelure (8) est positionnée par rapport à l'élément de raccordement flexible (6) de telle manière que la distance entre ledit bord et l'élément métallique (7) est plus petite que la dimension axiale de l'élément de raccordement flexible (6), ce qui produit une contrainte exercée sur l'élément de raccordement flexible (6) lorsqu'il est encliqueté sur l'arbre (2) et augmente en outre la force de fixation.

4. Système selon l'une des revendications précédentes, **caractérisé en ce que** l'élément de raccordement flexible (6) est constitué d'un alliage métallique flexible qui n'est pas déformé plastiquement facilement.

5. Appareil ménager, tel qu'un robot culinaire (1) comprenant un système selon la revendication 1.
